# FASCICULE DE BREVET EUROPEEN

(11) **EP 3 457 531 B1**
(45) Date de publication et mention de la délivrance du brevet: **01.04.2026**
(21) Numéro de dépôt: 18192618.9
(22) Date de dépôt: 05.09.2018
(51) Int. Cl.: H02K 5/128, H02K 9/197, H02K 3/28, H02K 1/20, H02K 7/08, H02K 9/06, H02K 9/18

(54) **STATOR EXTERNE D'UNE MACHINE ELECTRIQUE COMPRENANT DES BOBINAGES, DES PASSAGES DE FLUIDE DE REFROIDISSEMENT ET UN FRETTE**
AUSSENSTATOR EINER ELEKTRISCHEN MASCHINE MIT WICKLUNGEN, KÜHLFLÜSSIGKEITSKANÄLEN UND EINEM SPALTROHR
EXTERNAL STATOR OF AN ELECTRIC MACHINE COMPRISING WINDINGS, COOLING FLUID PASSAGES AND A SHEATH

(30) Priorité: 18.09.2017 FR 1758618
(43) Date de publication de la demande: 20.03.2019
(73) Titulaire: IFP Energies nouvelles, 92852 Rueil-Malmaison Cedex (FR)
(72) Inventeur: BOISSON, Julien, 92500 RUEIL-MALMAISON (FR); GAUSSENS, Benjamin, 78530 BUC (FR); MILOSAVLJEVIC, Misa, 95610 ERAGNY SUR OISE (FR); LE BERR, Fabrice, 92500 RUEIL MALMAISON (FR); BETTONI, Davide, SETTIMO VITTONE TO ITALY (IT); FAVRE, Luca, 11010 VALPELLINE (AO) (IT)
(74) Mandataire: IFP Energies nouvelles

(56) Documents cités:
- EP-A1- 2 224 578
- EP-A1- 2 928 048
- WO-A1-2017/050577
- WO-A2-2012/073206
- WO-A2-2014/016802
- DE-A1- 102006 003 598
- DE-A1- 102006 008 423
- FR-A1- 2 967 529
- FR-A1- 3 048 022
- US-A1- 2006 163 954

## Description

La présente invention se rapporte à une machine électrique tournante comportant un rotor et un stator.

Généralement, une telle machine électrique comporte un stator et un rotor disposés coaxialement l'un dans l'autre.

Le rotor est formé d'un corps de rotor portant des générateurs de flux magnétique, tels que des aimants permanents ou des bobinages.

Ce rotor est généralement logé à l'intérieur du stator qui porte des générateurs de flux magnétique sous la forme d'enroulements électriques (ou bobinages d'induit) pour générer un champ magnétique permettant d'entrainer en rotation le rotor en association avec le champ magnétique généré par les aimants et/ou les bobinages du rotor.

Le stator comprend de manière habituelle une pluralité d'encoches radiales en direction du rotor et s'étendant tout au long du pourtour du stator. Ces encoches sont prévues pour recevoir les bobinages d'induit qui y sont fixés par tous moyens connus.

Il est déjà connu un type de machine électrique à fort entrefer entre le rotor et le stator, ou "Air Gap", dont l'entrefer peut parfois mesurer plusieurs centimètres afin de laisser passer un fluide gazeux ou liquide au travers de cet entrefer.

Ce type de machine est notamment connu par les demandes de brevet US 2008289333 ou US 2013169074 ou US 2013043745 pour des machines synchro-réluctante à grand "Air Gap" fonctionnant à faible vitesse dont le fort entrefer permet de conduire un fluide au travers de celui-ci.

Cependant, ce fort entrefer représente un inconvénient pour assurer le passage du flux magnétique entre le rotor et le stator, et présente donc une limitation pour le rendement intrinsèque de la machine ainsi que pour l'encombrement du stator pour la même puissance délivrée.

Les documents FR 3 048 022, DE 10 2006 003 598, EP 2 928 048, WO 2012/ 073 206, DE 10 2006 008 423, EP 2 224 578, FR 2 967 529 , US 2006 / 163954 WO 2014/ 016 802 et WO 2017/050 577 concernent également des machines électriques.

Afin de remédier aux inconvénients énumérés ci-dessus, il a été développé une machine électrique à faible entrefer, permettant une meilleure conversion d'énergie entre le stator et le rotor, et à un passage de fluide possible au travers de la machine. Ce type de machine est connu notamment de la demande de brevet FR 3041831.

Ce type de machine donne satisfaction du fait notamment que les passages radiaux du stator, délimités de part et d'autre par des dents qui servent à faire transiter le flux du stator, forment un manchon tubulaire dans lequel est inséré le rotor. Néanmoins, il est souhaitable d'améliorer davantage les performances de la machine électrique, notamment en limitant les pertes fer, les pertes magnétiques, et les pertes aérodynamiques de la machine électrique, mais aussi faciliter son assemblage de façon à en limiter le coût.

Pour atteindre ces objectifs, la présente invention concerne une machine électrique comprenant un rotor et un stator. Le stator comporte plusieurs passages radiaux, plusieurs générateurs de flux magnétiques, et un manchon tubulaire. Selon l'invention le manchon tubulaire peut être réalisé en un matériau ferromagnétique, pour favoriser le passage du champ magnétique, et donc limiter les pertes magnétiques, ou, au contraire en un matériau amagnétique, afin d'éviter les courts-circuits entre dents. De plus, la surface interne du manchon tubulaire (c'est-à-dire la surface en vis-à-vis du rotor) est lisse pour limiter les pertes aérodynamiques. En outre, le manchon tubulaire participe à la tenue mécanique du stator et notamment des dents statoriques.

### Le dispositif selon l'invention

L'invention concerne une machine électrique comprenant un rotor et un stator, selon la revendication 1. Les modes avantageuses sont définit dans les revendications dépendantes.

De plus, l'invention concerne un compresseur électrique comprenant une machine électrique selon l'une des caractéristiques précédentes et un compresseur.

L'invention concerne également une turbine électrique comprenant une machine électrique selon l'une des caractéristiques précédentes et une turbine.

En outre, l'invention concerne un turbocompresseur électrique comprenant une turbine et un compresseur, la turbine et/ou le compresseur comprenant une machine électrique selon l'une des caractéristiques précédentes.

### Présentation succincte des figures

D'autres caractéristiques et avantages de la machine électrique selon l'invention, apparaîtront à la lecture de la description ci-après d'exemples non limitatifs de réalisations, en se référant aux figures annexées et décrites ci-après.
La figure 1 illustre une machine électrique selon un premier mode de réalisation de l'invention.
La figure 2 illustre une machine électrique selon un deuxième mode de réalisation de l'invention.
La figure 3 illustre une répartition circonférentielle des générateurs de flux magnétique selon une première variante de réalisation de l'invention.
La figure 4 illustre une répartition circonférentielle des générateurs de flux magnétique selon une deuxième variante de réalisation de l'invention.

### Description détaillée de l'invention

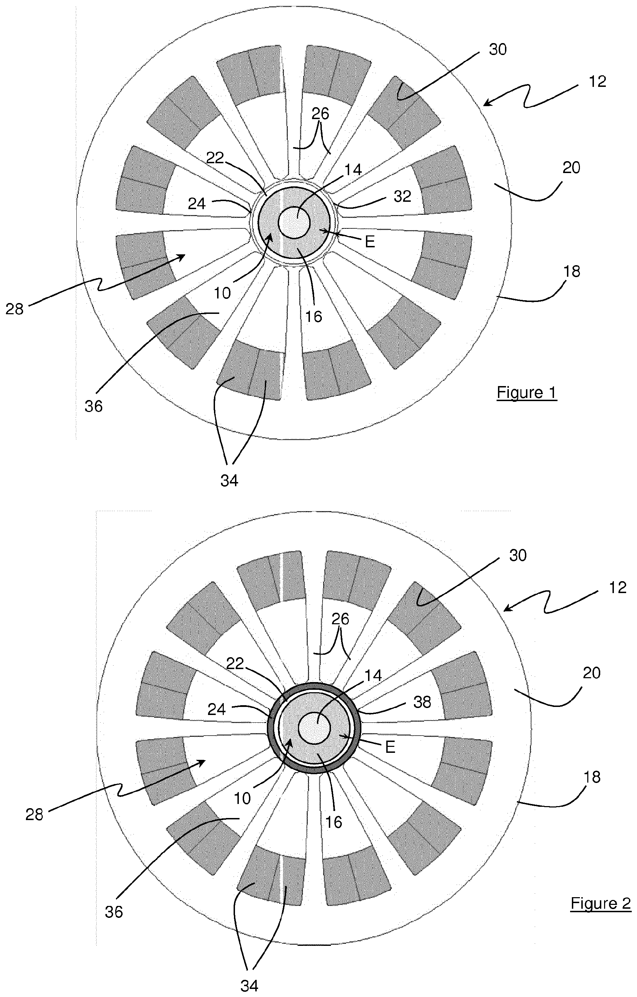

La figure 1 illustre schématiquement et de manière non limitative une machine électrique selon un mode de réalisation de l'invention. La machine électrique tournante illustrée, sur la figure 1, ici à titre d'exemple un moteur électrique, comporte un rotor 10 et un stator 12 qui, à l'état monté, sont imbriqués l'un dans l'autre en étant coaxiaux tout en laissant le rotor libre en rotation.

Cette machine est uniquement à titre d'exemple dans la suite de la description une machine synchrone à une paire de pôles.

Cela n'écarte en aucune façon toute autre machine électrique, intégrant davantage de paires de pôles ou comme des machines asynchrones, à rotor bobiné ou à cage d'écureuil.

Le rotor de la machine selon la figure 1 comporte, de manière connue en soi, un arbre 14, de préférence magnétique, sur lequel est placé un empilement de tôles ferromagnétiques planes ou un matériau massif ferromagnétique ou un aimant ou une combinaison de ces moyens, qui sont assemblées les uns aux autres par tous moyens connus pour former un corps de rotor 16. Pour le mode de réalisation de la figure 1, le corps de rotor 16 est formé d'un arbre magnétique et d'un aimant.

Ce rotor porte des générateurs de flux magnétique, principalement des aimants permanents de longueur sensiblement égale à la longueur du corps de rotor.

Le stator comporte un empilement de tôles ferromagnétiques planes 20 qui sont reliées entre elles par tous moyens connus pour former un corps de stator tubulaire 18.

Ce corps de stator comporte une partie centrale évidée 22 délimitée par un manchon tubulaire 24 (appelé également palier tubulaire) à l'intérieur duquel est logé le rotor. Selon l'invention, le manchon tubulaire 24 peut être réalisé en reliant les dents entre elles ou par une pièce rapportée.

Il est ainsi formé un entrefer E entre la périphérie externe du rotor 10 et la périphérie interne du manchon tubulaire 24 du stator 12.

De plus, la surface interne du manchon tubulaire 24 est lisse. Ainsi, le manchon tubulaire 24 permet de réaliser un tube cylindrique parfaitement lisse dans lequel le rotor 10 est mis en rotation. Cette surface lisse permet de limiter les pertes aérodynamiques, qui pourraient être importantes à haut régime (100 000 tr/min et au-delà).

Selon un aspect de l'invention, le manchon tubulaire 24 peut être réalisé en matériau ferromagnétique. Cette conception du stator 12 avec un manchon tubulaire 24 en matériau ferromagnétique permet de diminuer globalement les pertes fer au rotor, qui peuvent être importantes lors d'un fonctionnement à haute vitesse, et de transférer ces pertes fer du rotor vers le stator, où il est généralement plus facile de les évacuer par un système de refroidissement adéquat, notamment dans le cadre d'une machine à grille statorique traversée par un flux d'air pour son refroidissement.

Alternativement, le manchon tubulaire 24 peut être réalisé en matériau amagnétique, ce dernier assurant principalement un rôle de renforcement mécanique du stator et de réduction des pertes aérodynamiques.

Ainsi, la machine électrique selon l'invention présente un rendement élevé en limitant les pertes globales, et plus spécifiquement les pertes rotoriques et les pertes aérodynamiques dans l'entrefer, donc proche du rotor, où il est généralement difficile de les évacuer. Ceci permet de conserver un fonctionnement à température modérée du rotor, et de pouvoir utiliser des aimants plus performants, généralement plus sensibles à la température, permettant de cette manière d'augmenter les performances intrinsèques de la machine électrique.

Le corps de stator 18 est relié au manchon tubulaire 24 par une multiplicité de dents statoriques 26 (également appelées voiles radiaux) réparties circonférentiellement. De manière non limitative, le stator 12 de la figure 1 comporte douze dents statoriques disposées à 30° les unes des autres. Les dents statoriques délimitent entre elles des passages radiaux 28 de forme sensiblement triangulaire avec la pointe dirigée vers le manchon tubulaire 24. Ces passages s'étendent radialement du bord inférieur 30 de la culasse annulaire 20 jusqu'au bord extérieur 32 du palier et se déploient axialement tout au long du corps de stator 18.

Selon un mode de réalisation de l'invention, la surface externe du rotor 10 est lisse. Ainsi, l'entrefer E est délimité par deux surfaces parfaitement cylindriques sur la partie interne du stator 12 et la partie externe du rotor 10. Cette caractéristique permet de limiter les pertes aérodynamiques, qui sont élevées notamment à haut régime.

Conformément à une mise en œuvre de l'invention et en fonction de la puissance demandée à la machine, le manchon tubulaire 24 peut avoir une épaisseur comprise entre 0,1 et 5 mm, de manière à réaliser des ponts magnétiques fins. Ainsi, il est possible de réduire les harmoniques d'induction au rotor (avec un transfert des pertes fer vers le stator).

Comme illustré sur la figure 1, le stator 12 comporte des générateurs de flux magnétique 34, par exemple des bobinages d'induit 34, de préférence étanches aux liquides ou avec une protection, qui sont logés dans les passages radiaux 28, et plus précisément au voisinage du bord inférieur 30 de la culasse annulaire. Selon une mise en œuvre de l'invention, les générateurs de flux magnétique 34 peuvent être en appui contre le bord inférieur 30 de la culasse annulaire 20. Cette configuration permet des passages radiaux 28 de grande dimension pour permettre le passage d'un fluide dans la machine électrique, notamment pour son refroidissement, ou pour pouvoir alimenter un système de compression ou détente. Ainsi, le système de refroidissement est simplifié, grâce au fluide qui traverse la machine électrique, mais aussi grâce aux pertes limitées au rotor, permettant un refroidissement facilité du rotor, voire d'envisager un rotor sans refroidissement si la convection et la diffusion structurelle au sein de la machine électrique permettent d'évacuer les pertes.

Les dents statoriques 26 de grande longueur permettent ainsi d'éloigner les générateurs de flux magnétique 34 du manchon tubulaire 24. De plus, ces dents statoriques 26 permettent le guidage, vers le rotor 10, du flux magnétique généré par les générateurs de flux magnétique 34 (bobinages) qui sont éloignés de ce rotor 10.

De cette manière, la dimension de l'entrefer E est réduite (quelques dixièmes de millimètres) ce qui permet d'optimiser le rendement et les performances de la machine électrique.

Les galeries axiales de circulation de fluide 36 ainsi formées entre les bobinages, le bord extérieur du manchon tubulaire 24 et les dents statoriques 26 forment alors une grille statorique (avec encoches fermées) permettant de laisser passer un fluide, tel qu'un fluide gazeux ou liquide.

Ceci permet d'assurer l'intégration dans une veine gazeuse ou fluidique de la machine et/ou son refroidissement, et donc un positionnement optimisé dans un système donné contraint par l'encombrement et/ou le dégagement thermique.

De plus, les caractéristiques magnétiques de cette machine électrique permettent de limiter la quantité de matière active pour un niveau de performances donné, notamment par rapport à une machine à grand entrefer, ce qui permet de limiter la masse et donc l'inertie du rotor.

Selon une caractéristique, la machine électrique peut comprendre en outre un deuxième système de refroidissement (non représenté) situé sur la partie externe du stator 12 à proximité des générateurs de flux magnétiques 34. Ce deuxième système de refroidissement peut être réalisé par le même fluide qui traverse la machine électrique, ou par un autre fluide caloporteur. Cette caractéristique permet d'augmenter les performances de la machine électrique. Ainsi, il est possible de proposer une machine électrique à forte densité de puissance en augmentant notamment la densité de courant.

La figure 2 illustre, schématiquement et de manière non limitative, une machine électrique selon un deuxième mode de réalisation de l'invention. La machine électrique selon le deuxième mode de réalisation est identique à la machine électrique illustrée sur la figure 1 à l'exception du manchon tubulaire 24. Les éléments identiques décrits en rapport avec la figure 1 ne sont pas décrits plus en détail.

Pour ce deuxième mode de réalisation, le manchon tubulaire 24 est réalisé par une pièce rapportée 38 sur les dents statoriques 26. La pièce rapportée 38 peut être formée de cales ou d'une frette cylindrique. La pièce rapportée 38 assure la fermeture des encoches de la grille statorique formée par les dents statoriques 26.

De plus, la pièce rapportée 38 est réalisée en matériau ferromagnétique. Le matériau ferromagnétique peut être similaire ou différent du matériau ferromagnétique des dents statoriques 26.

Cette fermeture a postériori des encoches permet de bénéficier des avantages d'une structure à encoches ouvertes, notamment un bobinage automatisé présentant une réduction du coût de fabrication, et des avantages d'une structure à encoches fermées, en particulier la réduction des pertes, notamment au niveau du rotor.

Tel qu'illustré sur les figures 1 et 2, chaque passage radial 28 peut comporter deux générateurs de flux magnétique 34. Les générateurs de flux magnétique 34 peuvent être reliés à des phases électriques d'un onduleur de tension afin de générer un champ magnétique tournant, de manière à faire tourner le rotor 10.

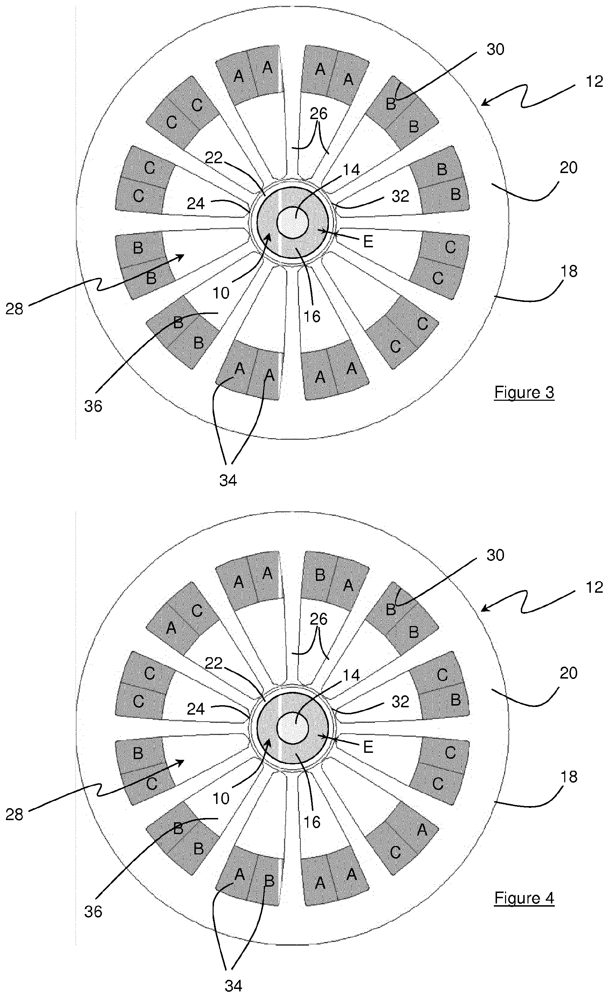

La figure 3 illustre, schématiquement et de manière non limitative, une première variante de connexion entre les générateurs de flux magnétique 34 et trois phases électriques A, B, C pour une machine électrique selon le mode de réalisation de la figure 1. Les éléments identiques par rapport à la machine électrique illustrée en figure 1 ne sont pas décrits plus en détail. Cette conception n'est pas limitative, notamment, la variante de réalisation de la figure 3 peut être mise en œuvre avec le mode de réalisation de la figure 2 pour faciliter le montage des générateurs de flux magnétique 34. La figure 3 correspond à une connexion à trois phases électriques A, B et C, toutefois la machine électrique pourrait être reliée à un nombre de phases électriques différent supérieur ou égal à deux, par exemple quatre ou six.

Pour la variante de réalisation de la figure 3, les deux générateurs de flux magnétique 34 de chaque passage radial sont reliés à la même phase électrique A, B ou C. Ainsi dans chaque passage radial 28, on trouve deux générateurs de flux reliés à la phase électrique A, ou deux générateurs de flux magnétique 34 reliés à la phase électrique B, ou deux générateurs de flux 34 reliés à la phase électrique C.

De préférence, la répartition circonférentielle des connexions entre les générateurs de flux magnétiques 34 et les phases électriques A, B et C peut être symétrique par rapport au centre du stator 12. En d'autres termes, les phases électriques A se font face par symétrie centrale, les phases électriques B se font face par symétrie centrale, et les phases C se font face par symétrie centrale.

Pour l'exemple de la figure 3, la répartition circonférentielle des générateurs de flux magnétique 34 au sein des douze passages radiaux est la suivante :
- un premier passage radial 28 comprenant deux générateurs de flux magnétique 34 reliés à la phase électrique A,
- un deuxième passage radial 28 comprenant deux générateurs de flux magnétique 34 reliés à la phase électrique A,
- un troisième passage radial 28 comprenant deux générateurs de flux magnétique 34 reliés à la phase électrique B,
- un quatrième passage radial 28 comprenant deux générateurs de flux magnétique 34 reliés à la phase électrique B,
- un cinquième passage radial 28 comprenant deux générateurs de flux magnétique 34 reliés à la phase électrique C,
- un sixième passage radial 28 comprenant deux générateurs de flux magnétique 34 reliés à la phase électrique C,
- les passages radiaux 28 du septième au douzième selon la répartition circonférentielle sont symétriques auxdits six premiers passages radiaux 28 par rapport au centre du stator 12 (c'est-à-dire le septième passage radial est identique au premier passage radial, le huitième passage radial est identique au deuxième passage radial, ..., et le douzième passage radial est identique au sixième passage radial).

Cette variante de réalisation n'est pas limitée à une réalisation avec douze passages radiaux 28, mais peut être adaptée à tout nombre de passages radiaux, en particulier six, dix-huit, etc. sans pour autant sortir du cadre de l'invention.

La figure 4 illustre, schématiquement et de manière non limitative, une première variante de connexion entre les générateurs de flux magnétique 34 et trois phases électriques A, B, C pour une machine électrique selon le mode de réalisation de la figure 1. Les éléments identiques par rapport à la machine électrique illustrée en figure 1 ne sont pas décrits plus en détail. Cette conception n'est pas limitative, notamment, la variante de réalisation de la figure 3 peut être mise en œuvre avec le mode de réalisation de la figure 2 pour faciliter le montage des générateurs de flux magnétique 34. La figure 4 correspond à une connexion à trois phases électrique A, B et C, toutefois la machine électrique pourrait être reliée à un nombre de phases électriques différent supérieur ou égal à deux, par exemple quatre ou six.

Pour la variante de réalisation de la figure 4, la répartition circonférentielle des passages radiaux comprend une alternance de passages radiaux 28 comprenant deux générateurs de flux magnétique 34 reliés à la même phase électrique, et de passages radiaux comprenant deux générateurs du flux magnétique 34 reliés à deux phases électriques différentes. En d'autres termes, pour la première moitié des passages radiaux 28, les deux générateurs de flux magnétique 34 sont reliés à une même phase électrique, et pour la deuxième moitié des passages radiaux 28, les deux générateurs de flux magnétique 34 sont reliés à deux phases électriques différentes, chaque passage radial 28 de la deuxième moitié étant agencé entre deux passages radiaux 28 de la première moitié.

De préférence, la répartition circonférentielle des connexions entre les générateurs de flux magnétiques 34 et les phases électriques A, B et C peut être symétrique par rapport au centre du stator 12. En d'autres termes, les phases électriques A se font face par symétrie centrale, les phases électriques B se font face par symétrie centrale, et les phases C se font face par symétrie centrale.

Pour l'exemple de la figure 4, la répartition circonférentielle des générateurs de flux magnétique 34 au sein des douze passages radiaux 28 est la suivante :
- un premier passage radial 28 comprenant deux générateurs de flux magnétique 34 reliés à la phase électrique A,
- un deuxième passage radial 28 comprenant un générateur de flux magnétique 34 relié à la phase électrique B, et un générateur de flux magnétique 34 relié à la phase électrique A,
- un troisième passage radial 28 comprenant deux générateurs de flux magnétique 34 reliés à la phase électrique B,
- un quatrième passage radial 28 comprenant un générateur de flux magnétique 34 relié à la phase électrique C, et un générateur de flux magnétique 34 relié à la phase électrique B,
- un cinquième passage radial 28 comprenant deux générateurs de flux magnétique 34 reliés à la phase électrique C,
- un sixième passage radial 28 comprenant un générateur de flux magnétique 34 relié à la phase électrique A et un générateur de flux magnétique 34 relié à la phase électrique C,
- les passages radiaux 28 du septième au douzième selon la répartition circonférentielle sont symétriques auxdits six premiers passages radiaux 28 par rapport au centre du stator 12 (c'est-à-dire le septième passage radial est identique au premier passage radial, le huitième passage radial est identique au deuxième passage radial, ..., et le douzième passage radial est identique au sixième passage radial).

Cette variante de réalisation n'est pas limitée à une réalisation avec douze passages radiaux 28, mais peut être adaptée à tout nombre de passages radiaux, en particulier six, dix-huit, etc. sans pour autant sortir du cadre de l'invention.

Cette répartition circonférentielle permet d'obtenir une force magnétomotrice plus sinusoïdale qu'avec le mode de réalisation de la figure 3, ce qui permet de limiter les ondulations de couple, ainsi que les pertes fer au niveau du rotor et du stator.

Telles qu'illustrées sur les figures 1 à 4, les dents statoriques 26 composant la grille statorique peuvent avoir une direction axiale sensiblement parallèle au fluide qui la traverse, c'est-à-dire sensiblement parallèle à l'axe longitudinal du stator, afin d'influencer le moins possible la direction de ce fluide.

Selon des variantes de réalisation de l'invention non illustrées, la direction axiale de ces dents statotriques peut être inclinée par rapport à l'axe longitudinal du stator.

De plus, cette direction peut également être une forme aérodynamique complexe, tel qu'une forme en vrille, destinée à guider/initier ou arrêter le mouvement du fluide.

Cette forme en vrille peut également permettre d'augmenter la surface de contact des dents statoriques avec le fluide.

Par ailleurs, ce vrillage des dents statoriques peut s'avérer judicieux d'un point de vue magnétique car il permet de réduire les ondulations de couple et cela selon l'angle d'inclinaison.

En outre, ces dents statoriques peuvent aussi avoir un profil aérodynamique pour minimiser la perte de charge liée au passage du fluide traversant la grille, comme une forme, en section, de goutte d'eau ou d'aile d'avion.

Un traitement surfacique du stator et du rotor peut être prévu pour rendre cette machine compatible avec tout type de fluide et tout type d'utilisation dans l'industrie du transport, l'industrie alimentaire, pétrolière, bâtiment & travaux publics et autres nécessitant un transport et ou guidage d'un fluide à travers d'une machine électrique.

Du point de vue du refroidissement de la machine électrique, cette architecture de machine électrique offre une surface d'échange très élevée au niveau du stator permettant d'utiliser un système de refroidissement simplifié par rapport à une machine électrique classique présentant des performances similaires et potentiellement d'augmenter la densité de courant dans le stator grâce à ce refroidissement optimisé. En effet, cette architecture permet d'avoir :
- un refroidissement passif ou intrinsèque, et/ou
- un refroidissement complémentaire actif ou passif sur la périphérie de la culasse statorique.

De par ses avantages intrinsèques liés à sa géométrie qui lui permet d'être traversée par un fluide et d'éloigner radialement les générateurs de flux statoriques des générateurs de flux rotoriques, ce type de machine est facilement intégrable sur un système existant avec des modifications mineures liées à son intégration.

Selon un exemple de mise en œuvre de l'invention, la machine électrique peut être associée de manière compacte avec un compresseur dans une architecture de compresseur électrique, de turbine électrique ou de turbocompresseur électrique. Cette compacité est pertinente lorsque le système doit tourner à très haut régime, ce qui nécessite de réduire au maximum la longueur et la masse/inertie des arbres en rotation.

### Exemple d'application

Les caractéristiques et avantages de la machine électrique selon l'invention apparaîtront plus clairement à la lecture de l'exemple d'application ci-après.

Pour cet exemple, on compare une machine électrique à encoches ouvertes (selon l'art antérieur AA) et une machine électrique à encoche fermées selon l'invention INV (avec manchon tubulaire lisse en matériau magnétique selon l'exemple de la figure 1). Les deux machines électriques sont identiques à l'exception de l'ouverture ou de la fermeture des encoches. Les deux machines électriques sont constituées de tôles NO20.

Le tableau 1 illustre l'impact de la fermeture des encoches sur les niveaux de pertes fer. Dans ce tableau lpeak correspond au courant maximum dans la phase, et psi correspond à l'angle de défluxage.

**Tableau 1 - Pertes fer**

| | | | | Pertes fer | | | | |
|---|---|---|---|---|---|---|---|---|
| | Ipeak (A) | Psi (°) | Zone | hystérésis (W) | classique (W) | excès (W) | Total (W) | Somme (W) |
| AA | 300 | 60 | stator | 225,7 | 47,2 | 151,1 | 425 | 619,1 |
| | | | rotor | 22,3 | 47,5 | 124,4 | 194,1 | |
| INV | 300 | 60 | stator | 237,6 | 48,1 | 156 | 441,7 | 584,6 |
| | | | rotor | 13,8 | 30,9 | 98,3 | 143 | |

On remarque qu'au global, les pertes fer diminuent pour la machine électrique selon l'invention. On peut observer que les pertes fer au rotor diminuent de l'ordre de 26 %. Dans le même temps, les pertes fer au niveau du stator n'augmentent que de 4 %.

## Revendications

1. Machine électrique comprenant un rotor (10) et un stator (12), ledit stator (12) comportant une pluralité d'encoches (28) disposées circonférentiellement le long dudit stator (12), une pluralité de bobinages d'induit (34) logées dans lesdites encoches (28) pour générer un champ magnétique, un manchon tubulaire (24) interne recevant ledit rotor (10), , le stator comportant un empilement de tôles ferromagnétiques planes (20) reliées entre elles pour former un corps de stator tubulaire (18), le corps de stator (18) comportant une partie centrale évidée délimitée par le manchon tubulaire (24) à l'intérieur duquel est logé le rotor (10), le corps de stator (18) étant relié au manchon tubulaire (24) par une multiplicité de dents statoriques (26) réparties circonférentiellement, lesdites encoches (28) comportant des galeries de circulation d'un fluide (36) en regard desdits bobinages d'induit (34), lesdites galeries axiales de circulation d'un fluide (36) étant formées entre les bobinages d'induit (34), le bord extérieur du manchon tubulaire (24) et les dents statoriques (26) formant une grille statorique permettant de laisser passer ledit fluide la surface interne du manchon tubulaire (24) étant lisse, la surface interne du manchon tubulaire (24) étant la surface en vis-à-vis du rotor (10), et la surface externe du rotor étant lisse, la surface externe du rotor et la surface interne du manchon interne étant parfaitement cylindriques et délimitant l'entrefer, **caractérisée en ce que** le manchon tubulaire (24) est réalisé par une pièce rapportée (38) sur les dents statoriques (26), ladite pièce rapportée (38) assurant la fermeture des encoches (28) de la grille statorique formée par les dents statoriques (26), la pièce rapportée (38) étant en matériau ferromagnétique, ledit manchon tubulaire (24) ayant une épaisseur comprise entre 0.1 mm et 5 mm.

2. Machine électrique selon la revendication précédente, dans laquelle lesdites encoches (28) sont délimitées par des dents statoriques (26), une culasse annulaire dudit stator (20) et ledit manchon tubulaire (24).

3. Machine électrique selon la revendication 2, dans laquelle ladite pièce rapportée (38) est sous la forme de cales ou de frette cylindrique.

4. Machine électrique selon l'une des revendications 2 ou 3, dans laquelle lesdites galeries de circulation de fluide (36) sont délimitées par lesdites dents statoriques (26), ladite culasse annulaire dudit stator (20) et lesdits bobinages d'induit (34).

5. Machine électrique selon l'une des revendications précédentes, dans laquelle chaque encoche (28) comporte deux bobinages d'induit (34).

6. Machine électrique selon la revendication 6, dans laquelle lesdits bobinages d'induit (34) sont reliés à plusieurs phases électriques (A, B, C), et dans laquelle chaque encoche (28) comporte deux bobinages d'induit (34) reliés à la même phase électrique (A, B, C).

7. Machine électrique selon la revendication 6, dans laquelle lesdits bobinages d'induit (34) sont reliés à plusieurs phases électriques (A, B, C), et dans laquelle la répartition circonférentielle desdites encoches (28) comprend une alternance d'encoches (28) comprenant deux bobinages d'induit (34) reliés à la même phase électrique (A, B, C), et d'encoches (28) comprenant deux bobinages d'induit (34) reliés à deux phases électriques différentes (A, B, C).

8. Machine électrique selon la revendication 6, dans laquelle ledit stator (12) comprend douze encoches (28), et dans laquelle lesdits bobinages d'induit (34) sont reliés à trois phases électriques (A, B, C), et dans laquelle la répartition circonférentielle desdits bobinages d'induit (34) au sein desdites encoches (28) est la suivante :
a) la première encoche (28) comprend deux bobinages d'induit (34) reliés à la première phase électrique (A),
b) la deuxième encoche (28) comprend un bobinage d'induit (34) relié à la deuxième phase électrique (B), et un bobinage d'induit (34) relié à ladite première phase électrique (A),
c) la troisième encoche (28) comprend deux bobinages d'induit (34) reliés à ladite deuxième phase électrique (B),
d) la quatrième encoche (28) comprend un bobinage d'induit (34) relié à la troisième phase électrique (C), et un bobinage d'induit (34) relié à ladite deuxième phase électrique (B),
e) la cinquième encoche (28) comprend deux bobinages d'induit (34) reliés à ladite troisième phase électrique (C),
f) la sixième encoche (28) comprend un bobinage d'induit (34) relié à ladite première phase électrique (A), et un bobinage d'induit (34) relié à ladite troisième phase électrique (C),
g) les encoches (28) de la septième à la douzième selon la répartition circonférentielle sont symétriques auxdites six premières encoches (28) par rapport au centre dudit stator (12).

9. Machine électrique selon l'une des revendications précédentes, dans laquelle ledit fluide est un fluide liquide ou gazeux pour le refroidissement de ladite machine électrique.

10. Machine électrique selon l'une des revendications précédentes, dans laquelle ladite machine électrique comprend un système de refroidissement situé sur la partie externe dudit stator (12) à proximité desdits bobinages d'induit (34).

11. Compresseur électrique comprenant une machine électrique selon l'une des revendications précédentes et un compresseur.

12. Turbine électrique comprenant une machine électrique selon l'une des revendications 1 à 10 et une turbine.

13. Turbocompresseur électrique comprenant une turbine et un compresseur, la turbine étant une turbine selon la revendication 12 et/ou le compresseur étant un compresseur selon la revendication 11.

## Patentansprüche

1. Elektrische Maschine, beinhaltend einen Rotor (10) und einen Stator (12), wobei der Stator (12) eine Vielzahl von Nuten (28), die entlang des Stators (12) über den Umfang angeordnet sind, eine Vielzahl von Ankerwicklungen (34), die in den Nuten (28) untergebracht sind, um ein Magnetfeld zu erzeugen, und eine rohrförmige Innenhülse (24), die den Rotor (10) aufnimmt, umfasst, wobei der Stator einen Stapel ebener ferromagnetischer Bleche (20) umfasst, die untereinander verbunden sind, um einen rohrförmigen Statorkörper (18) zu bilden, wobei der Statorkörper (18) einen ausgesparten Mittelteil umfasst, der durch die rohrförmige Hülse (24) begrenzt wird, in deren Innerem der Rotor (10) untergebracht ist, wobei der Statorkörper (18) durch eine Vielzahl von über den Umfang verteilten Statorzähnen (26) mit der rohrförmigen Hülse (24) verbunden ist, wobei die Nuten (28) Fluidzirkulationsgänge (36) gegenüber den Ankerwicklungen (34) umfassen, wobei die axialen Fluidzirkulationsgänge (36), die zwischen den Ankerwicklungen (34), dem Außenrand der rohrförmigen Hülse (24) und den Statorzähnen (26) gebildet sind, ein Statorgitter bilden, das den Durchgang des Fluids gestattet, wobei die Innenoberfläche der rohrförmigen Hülse (24) glatt ist, wobei die Innenoberfläche der rohrförmigen Hülse (24) die Oberfläche gegenüber dem Rotor (10) ist, und wobei die Außenoberfläche des Rotors glatt ist, wobei die Außenoberfläche des Rotors und die Innenoberfläche der Innenhülse perfekt zylindrisch sind und den Luftspalt begrenzen, **dadurch gekennzeichnet, dass** die rohrförmige Hülse (24) durch ein an die Statorzähne (26) angefügtes Teil (38) verwirklicht ist, wobei das angefügte Teil (38) das Verschließen der Nuten (28) des durch die Statorzähne (26) gebildeten Statorgitters gewährleistet, wobei das angefügte Teil (38) aus ferromagnetischem Material besteht, wobei die rohrförmige Hülse (24) eine Dicke zwischen 0,1 mm und 5 mm aufweist.

2. Elektrische Maschine nach dem vorhergehenden Anspruch, wobei die Nuten (28) durch Statorzähne (26), ein ringförmiges Joch des Stators (20) und die rohrförmige Hülse (24) begrenzt werden.

3. Elektrische Maschine nach Anspruch 2, wobei das angefügte Teil (38) die Form von Keilen oder eines zylindrischen Spaltrohrs aufweist.

4. Elektrische Maschine nach einem der Ansprüche 2 oder 3, wobei die Fluidzirkulationsgänge (36) durch die Statorzähne (26), das ringförmige Joch des Stators (20) und die Ankerwicklungen (34) begrenzt werden.

5. Elektrische Maschine nach einem der vorhergehenden Ansprüche, wobei jede Nut (28) zwei Ankerwicklungen (34) umfasst.

6. Elektrische Maschine nach Anspruch 6, wobei die Ankerwicklungen (34) mit mehreren elektrischen Phasen (A, B, C) verbunden sind und wobei jede Nut (28) zwei Ankerwicklungen (34) umfasst, die mit derselben elektrischen Phase (A, B, C) verbunden sind.

7. Elektrische Maschine nach Anspruch 6, wobei die Ankerwicklungen (34) mit mehreren elektrischen Phasen (A, B, C) verbunden sind und wobei die Umfangsverteilung der Nuten (28) abwechselnd Nuten (28), die zwei Ankerwicklungen (34) beinhalten, die mit derselben elektrischen Phase (A, B, C) verbunden sind, und Nuten (28), die zwei Ankerwicklungen (34) beinhalten, die mit zwei unterschiedlichen elektrischen Phasen (A, B, C) verbunden sind, beinhaltet.

8. Elektrische Maschine nach Anspruch 6, wobei der Stator (12) zwölf Nuten (28) beinhaltet und wobei die Ankerwicklungen (34) mit drei elektrischen Phasen (A, B, C) verbunden sind und wobei die Umfangsverteilung der Ankerwicklungen (34) innerhalb der Nuten (28) folgendermaßen ist:
a) die erste Nut (28) beinhaltet zwei Ankerwicklungen (34), die mit der ersten elektrischen Phase (A) verbunden sind,
b) die zweite Nut (28) beinhaltet eine Ankerwicklung (34), die mit der zweiten elektrischen Phase (B) verbunden ist, und eine Ankerwicklung (34), die mit der ersten elektrischen Phase (A) verbunden ist,
c) die dritte Nut (28) beinhaltet zwei Ankerwicklungen (34), die mit der zweiten elektrischen Phase (B) verbunden sind,
b) die vierte Nut (28) beinhaltet eine Ankerwicklung (34), die mit der dritten elektrischen Phase (C) verbunden ist, und eine Ankerwicklung (34), die mit der zweiten elektrischen Phase (B) verbunden ist,
e) die fünfte Nut (28) beinhaltet zwei Ankerwicklungen (34), die mit der dritten elektrischen Phase (C) verbunden sind,
f) die sechste Nut (28) beinhaltet eine Ankerwicklung (34), die mit der ersten elektrischen Phase (A) verbunden ist, und eine Ankerwicklung (34), die mit der dritten elektrischen Phase (C) verbunden ist,
g) die Nuten (28) von der siebten bis zur zwölften gemäß der Umfangsverteilung sind in Bezug auf die Mitte des Stators (12) zu den sechs ersten Nuten (28) symmetrisch.

9. Elektrische Maschine nach einem der vorhergehenden Ansprüche, wobei das Fluid ein flüssiges oder gasförmiges Fluid zur Kühlung der elektrischen Maschine ist.

10. Elektrische Maschine nach einem der vorhergehenden Ansprüche, wobei die elektrische Maschine ein Kühlsystem beinhaltet, das sich an dem äußeren Teil des Stators (12) in der Nähe der Ankerwicklungen (34) befindet.

11. Elektrischer Kompressor, der eine elektrische Maschine nach einem der vorhergehenden Ansprüche und einen Kompressor beinhaltet.

12. Elektrische Turbine, die eine elektrische Maschine nach einem der Ansprüche 1 bis 10 und eine Turbine beinhaltet.

13. Elektrischer Turbokompressor, der eine Turbine und einen Kompressor beinhaltet, wobei die Turbine eine Turbine nach Anspruch 12 ist und/oder der Kompressor ein Kompressor nach Anspruch 11 ist.

## Claims

1. Electric machine comprising a rotor (10) and a stator (12), said stator (12) including a plurality of slots (28) arranged circumferentially along said stator (12), a plurality of armature windings (34) housed in said slots (28) for generating a magnetic field and an inner tubular sleeve (24) receiving said rotor (10), the stator comprising a stack of flat ferromagnetic laminations (20) connected together to form a tubular stator body (18), the stator body (18) including a recessed central part delimited by the tubular sleeve (24) inside which the rotor (10) is housed, the stator body (18) being connected to the tubular sleeve (24) by a multiplicity of stator teeth (26) distributed circumferentially, said slots (28) including fluid circulation channels (36) facing said armature windings (34), said axial fluid circulation channels (36) being formed between the armature windings (34), the outer edge of the tubular sleeve (24) and the stator teeth (26) forming a stator grid through which said fluid can pass, the inner surface of the tubular sleeve (24) being smooth, the inner surface of the tubular sleeve (24) being the surface facing the rotor (10), and the outer surface of the rotor being smooth, the outer surface of the rotor and the inner surface of the inner sleeve being perfectly cylindrical and delimiting the air gap, **characterized in that** the tubular sleeve (24) is formed by an attached part (38) on the stator teeth (26), said attached part (38) closing the slots (28) of the stator grid formed by the stator teeth (26), the attached part (38) being made of ferromagnetic material, said tubular sleeve (24) having a thickness of between 0.1 mm and 5 mm.

2. Electric machine according to the preceding claim, wherein said slots (28) are delimited by stator teeth (26), an annular yoke of said stator (20) and said tubular sleeve (24).

3. Electric machine according to Claim 2, wherein said attached part (38) is in the form of shims or a cylindrical hoop.

4. Electric machine according to Claim 2 or 3, wherein said fluid circulation channels (36) are defined by said stator teeth (26), said annular yoke of said stator (20) and said armature windings (34).

5. Electric machine according to one of the preceding claims, wherein each slot (28) has two armature windings (34).

6. Electric machine according to Claim 6, wherein said armature windings (34) are connected to several electrical phases (A, B, C), and wherein each slot (28) includes two armature windings (34) connected to the same electrical phase (A, B, C).

7. Electric machine according to Claim 6, wherein said armature windings (34) are connected to several electrical phases (A, B, C), and wherein the circumferential distribution of said slots (28) comprises slots (28) comprising two armature windings (34) connected to the same electrical phase (A, B, C) arranged alternately with slots (28) comprising two armature windings (34) connected to two different electrical phases (A, B, C).

8. Electric machine according to Claim 6, wherein said stator (12) comprises twelve slots (28), and wherein said armature windings (34) are connected to three electrical phases (A, B, C), and wherein the circumferential distribution of said armature windings (34) within said slots (28) is as follows:
a) the first slot (28) comprises two armature windings (34) connected to the first electrical phase (A),
b) the second slot (28) comprises an armature winding (34) connected to the second electrical phase (B), and an armature winding (34) connected to said first electrical phase (A),
c) the third slot (28) comprises two armature windings (34) connected to said second electrical phase (B),
d) the fourth slot (28) comprises an armature winding (34) connected to the third electrical phase (C), and an armature winding (34) connected to said second electrical phase (B),
e) the fifth slot (28) comprises two armature windings (34) connected to said third electrical phase (C),
f) the sixth slot (28) comprises an armature winding (34) connected to said first electrical phase (A), and an armature winding (34) connected to said third electrical phase (C),
g) the seventh to twelfth slots (28) in the circumferential distribution are symmetrical to said first six slots (28) with respect to the centre of said stator (12).

9. Electric machine according to one of the preceding claims, wherein said fluid is a liquid or gaseous fluid for cooling said electric machine.

10. Electric machine according to one of the preceding claims, wherein said electric machine comprises a cooling system located on the outer portion of said stator (12) near to said armature windings (34).

11. Electric compressor comprising an electric machine according to one of the preceding claims and a compressor.

12. Electric turbine comprising an electric machine according to one of Claims 1 to 10 and a turbine.

13. Electric turbocharger comprising a turbine and a compressor, the turbine being a turbine according to Claim 12 and/or the compressor being a compressor according to Claim 11.
